# EUROPEAN PATENT APPLICATION

(11) **EP 4 804 114 A1**
(43) Date of publication of application: **09.09.2026**
(21) Application number: 23957559.0
(22) Date of filing: 30.10.2023
(51) Int. Cl.: G06T 1/00, H04N 7/18

(54) **IMAGE PROCESSING PROGRAM, IMAGE PROCESSING DEVICE, AND IMAGE PROCESSING METHOD**

(71) Applicant: FUJITSU LIMITED, Kawasaki-shi, Kanagawa 211-8588 (JP)
(72) Inventor: OUCHI, Yumo, Kawasaki-shi, Kanagawa 211-8588 (JP)
(74) Representative: Hoffmann Eitle
(86) International application number: PCT/JP2023/039045
(87) International publication number: WO 2025/094226

(57) **Abstract**

Privacy of a subject in an image from which personal features are extracted is protected.

A control unit (11) obtains a first feature (V1) from a person region (a1) of an input image by performing a predetermined feature calculation (c1) and a second feature (V1a) from a processed person region (a2) by performing the predetermined feature calculation (c1), the processed person region being obtained by processing a part of the person region of the input image. The control unit (11) determines an image processing region in the person region of the input image and an image processing characteristic for the image processing region so that the amount of change between the first feature (V1) and the second feature (V1a) is equal to or less than a predetermined value. In addition, the control unit (11) generates, by machine learning, an image processing model (m0) that receives an input image and generates an output image by processing the input image based on the determined image processing region and image processing characteristic, and generates a processed image (gla) obtained by processing a part of a person region of a captured image (g1) using the image processing model (m0).

## Description

### Technical Field

An embodiment discussed herein relates to an image processing program, an image processing apparatus, and an image processing method.

### Background Art

In recent years, a continuous authentication technique has been developed in which features of a person are extracted from images captured by surveillance cameras installed within an area and the position of the person is estimated in real time. By implementing a system that employs such continuous authentication in, for example, airports, shopping centers, and others, it is possible to provide personalized services based on the purchase behavior or the like of each customer.

As related techniques, for example, a technique has been proposed that a degree of abstraction is determined for each of a plurality of partial regions of a verification target included in a captured image, and an image in which the partial regions are abstracted is generated. Further, a technique has been proposed for generating an obfuscated image by flattening the gradation of a privacy-protection image. Still further, a technique has been proposed in which the face of a person in a first image is determined as a bounding box, and a second image is generated by modifying the contrast value of the bounding box. Yet still further, a technique has been proposed for displaying, in the form of a colored filling, a face area of a person included in a surveillance image.

In addition, there has been proposed a technique of extracting a target portion to be masked from an input image, masking the target portion, and removing the masking in accordance with a specific procedure. Further, a technique has been proposed for performing abnormality detection on an image, captured by a surveillance camera, in a mosaicked state. Still further, a technique has been proposed for performing object recognition on a blurred image by using a multi-pinhole camera as a surveillance camera.

### Citation List

### Patent Literature

Japanese Laid-open Patent Publication No. 2021-149747
Japanese Laid-open Patent Publication No. 2022-96519 U.S. Patent No. 11604938
U.S. Patent Application Publication No. 2019/0377958
International Publication Pamphlet No. WO 2018/225775
International Publication Pamphlet No. WO 2021/210313
International Publication Pamphlet No. WO 2021/176899

### Summary of Invention

### Technical Problem

However, conventional personal feature extraction in continuous authentication uses images from which subjects receiving personalized services are identifiable. Therefore, these images are viewed by the third party who provide the services, which causes a problem in that the privacy of the subjects is not protected.

In one aspect, it is an object of the present disclosure to provide an image processing program, an image processing apparatus, and an image processing method that protect the privacy of a subject in an image from which personal features are extracted.

### Solution to Problem

In order to solve the above problem, an image processing program is provided. The image processing program causes a computer to obtain a first feature from a person region of an input image by performing a predetermined feature calculation, obtain a second feature from a processed person region by performing the predetermined feature calculation, the processed person region being obtained by processing a part of the person region of the input image, determine an image processing region in the person region of the input image and an image processing characteristic for the image processing region so that an amount of change between the first feature and the second feature is equal to or less than a predetermined value, generate, by machine learning, an image processing model that receives the input image and generates an output image by processing the input image based on the determined image processing region and the determined image processing characteristic, and process a part of a person region of a captured image using the image processing model.

Further, in order to solve the above problem, there is provided an image processing apparatus that performs the same process as the image processing program.

Still further, in order to solve the above problem, there is provided an image processing method that is executed by a computer to perform the same process as the image processing program.

### Advantageous Effects of Invention

In one aspect, it is possible to protect the privacy of a subject in an image from which personal features are extracted.

The above and other objects, features and advantages of the present invention will become apparent from the following description taken in conjunction with the accompanying drawings which illustrate, by way of example, a preferred embodiment of the invention.

### Brief Description of Drawings

[FIG. 1] FIG. 1 is a diagram for describing an example of an image processing apparatus.
[FIG. 2] FIG. 2 illustrates an example of a configuration of an image processing system.
[FIG. 3] FIG. 3 illustrates an example of a hardware configuration of the image processing apparatus.
[FIG. 4] FIG. 4 illustrates an example of functional blocks of the image processing apparatus and a continuous authentication apparatus.
[FIG. 5] FIG. 5 is a flowchart illustrating an example operation for training a noise image generation model.
[FIG. 6] FIG. 6 is a flowchart illustrating an example operation for image processing.
[FIG. 7] FIG. 7 is a flowchart illustrating an example of a first training process for a trained noise image generation model.
[FIG. 8] FIG. 8 is a flowchart illustrating an example of a second training process for a trained noise image generation model.
[FIG. 9] FIG. 9 is a flowchart illustrating an example of a third training process for a trained noise image generation model.
[FIG. 10] FIG. 10 is a flowchart illustrating an example of a fourth training process for a trained noise image generation model.
[FIG. 11] FIG. 11 is a flowchart illustrating an example of a fifth training process for a trained noise image generation model.
[FIG. 12] FIG. 12 is a flowchart illustrating the example of the fifth training process for the trained noise image generation model.

### Description of Embodiments

Hereinafter, an embodiment will be described with reference to the drawings.

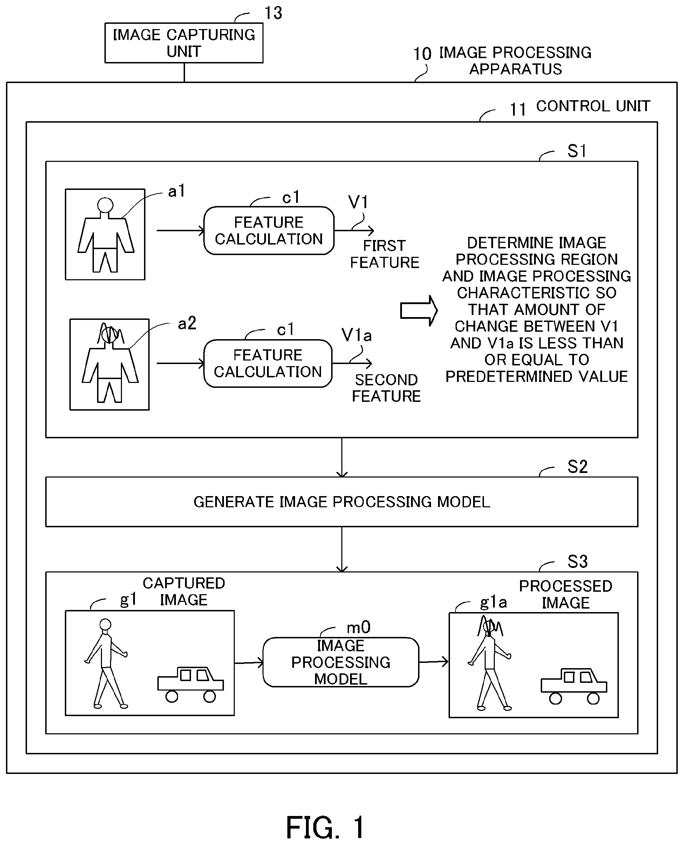

FIG. 1 is a diagram for describing an example of an image processing apparatus. An image processing apparatus 10 includes a control unit 11 and an image capturing unit 13. The image processing apparatus 10 is applied to, for example, a system in which continuous authentication is performed by extracting features of a person from a captured image using a feature extraction model. The functions of the control unit 11 are implemented, for example, by a processor included in the image processing apparatus 10 executing a predetermined program, the processor not being illustrated. The image capturing unit 13 is, for example, a surveillance camera.

[Step S1] The control unit 11 obtains a first feature V1 from a person region a1 of an input image by performing a predetermined feature calculation c1. Further, the control unit 11 obtains a second feature V1a from a processed person region a2 by performing the predetermined feature calculation c1, the processed person region a2 being obtained by processing a part of the person region of the input image. Then, the control unit 11 determines an image processing region in the person region of the input image and an image processing characteristic for the image processing region so that the amount of change between the first feature V1 and the second feature V1a is equal to or less than a predetermined value.

The image processing region corresponds to, for example, a non-attention region that is not attended to for personal feature extraction by the feature extraction model that performs the predetermined feature calculation c1. The image processing characteristic for the image processing region corresponds to, for example, noise that conceals the personal individuality of a person.

[Step S2] The control unit 11 generates, by machine learning, an image processing model m0 that receives an input image and generates an output image by processing the input image on the basis of the determined image processing region and the determined image processing characteristic.

[Step S3] The control unit 11 generates a processed image g1a by processing a part of the person region of a captured image g1 using the image processing model m0. In the example of FIG. 1, the image processing region is the face of a person, and image processing is performed to add noise to the face of the person as the image processing characteristic.

As described above, the image processing apparatus 10 processes a part of a person region of a captured image using a model, the model being trained by machine learning to generate a processed image based on an image processing region in which personal features do not change and an image processing characteristic for the image processing region. This makes it possible to protect the privacy of a subject in an image from which personal features are extracted.

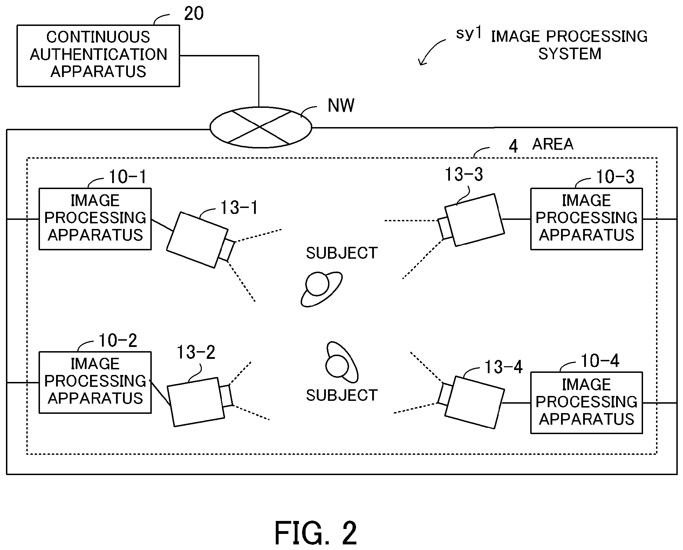

FIG. 2 illustrates an example of a configuration of an image processing system. An image processing system sy1 includes image processing apparatuses 10-1, ···, and 10-4, a continuous authentication apparatus 20, and surveillance cameras 13-1, **···,** and 13-4.

The continuous authentication apparatus 20 is connected to the image processing apparatuses 10-1, ···, and 10-4 via a network NW. The surveillance cameras 13-1, ···, and 13-4 are connected to the image processing apparatuses 10-1, ···, and 10-4, respectively, and are arranged within an area 4. In the example of FIG. 2, a plurality of image processing apparatuses with surveillance cameras are provided in the area 4, but only one image processing apparatus with a surveillance camera may be provided.

The surveillance cameras 13-1, ···, and 13-4 capture images of subjects in the area 4 where continuous authentication is performed. The image processing apparatus 10-1 processes a frame image captured by the surveillance camera 13-1 to generate a processed image as described above with reference to FIG. 1, and transmits the processed image to the continuous authentication apparatus 20 via the network NW. The image processing apparatus 10-2 processes a frame image captured by the surveillance camera 13-2 to generate a processed image as described above with reference to FIG. 1, and transmits the processed image to the continuous authentication apparatus 20 via the network NW.

Similarly, the image processing apparatus 10-3 processes a frame image captured by the surveillance camera 13-3 to generate a processed image as described above with reference to FIG. 1, and transmits the processed image to the continuous authentication apparatus 20 via the network NW. The image processing apparatus 10-4 processes a frame image captured by the surveillance camera 13-4 to generate a processed image as described above with reference to FIG. 1, and transmits the processed image to the continuous authentication apparatus 20 via the network NW.

The continuous authentication apparatus 20 performs continuous authentication by performing, using the received processed images, ID identification (person re-identification: Re-ID) of the same person across the plurality of surveillance cameras, based on features representing the appearance of the person, such as clothing and body shape. At this time, the frame images may be stored.

A processed image used by the continuous authentication apparatus 20 for continuous authentication using a feature extraction model is a noise image obtained by adding noise to an original frame image to conceal personal individuality while minimizing an effect on feature calculation performed by the feature extraction model.

For example, the noise image is an image in which such noise is added to an image region that is not attended to for personal feature extraction by the feature extraction model. As a result, it is able to protect the privacy of a person appearing in an image transmitted to the continuous authentication apparatus 20 without degrading the performance of the continuous authentication.

The image processing apparatuses 10-1, ···, and 10-4 and the continuous authentication apparatus 20 may be implemented by, for example, computers. FIG. 2 illustrates an example in which the image processing apparatuses are connected to the respective surveillance cameras. Alternatively, the functions of each image processing apparatus may be implemented in the corresponding surveillance camera.

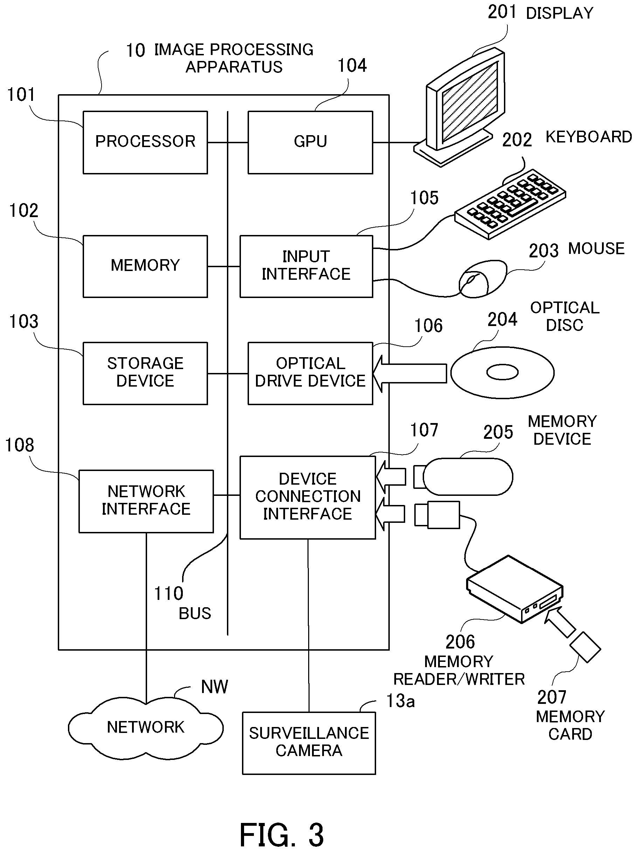

FIG. 3 illustrates an example of a hardware configuration of the image processing apparatus. The image processing apparatus 10 is entirely controlled by a processor 101 having functions of the control unit 11.

A memory 102 and a plurality of peripheral devices are connected to the processor 101 via a bus 110. The processor 101 may be a multiprocessor. The processor 101 is, for example, a central processing unit (CPU), a micro processing unit (MPU), or a digital signal processor (DSP). At least a part of the functions implemented by the processor 101 executing a program may be implemented by an electronic circuit such as an application specific integrated circuit (ASIC) or a programmable logic device (PLD).

The memory 102 is used as a main storage device of the image processing apparatus 10. The memory 102 temporarily stores at least part of an operating system (OS) program and application programs to be executed by the processor 101. The memory 102 also stores various data used by the processor 101 during its operation. As the memory 102, for example, a volatile semiconductor storage device such as a random access memory (RAM) is used.

The peripheral devices connected to the bus 110 include a storage device 103, a graphics processing unit (GPU) 104, an input interface 105, an optical drive device 106, a device connection interface 107, and a network interface 108.

The storage device 103 electrically or magnetically writes and reads data to and from a built-in storage medium. The storage device 103 is used as an auxiliary storage device of the image processing apparatus 10. The storage device 103 stores OS programs, application programs, and various data. As the storage device 103, for example, a hard disk drive (HDD) or a solid state drive (SSD) may be used.

The GPU 104 is an arithmetic device that performs image processing, and is also called a graphic controller. A display 201 is connected to the GPU 104. The GPU 104 displays images on the screen of the display 201 in accordance with instructions from the processor 101.

A keyboard 202 and a mouse 203 are connected to the input interface 105. The input interface 105 transmits signals received from the keyboard 202 and the mouse 203 to the processor 101. The mouse 203 is an example of a pointing device, and other pointing devices may be used. Examples of other pointing devices include a touch panel, a tablet, a touch pad, and a track ball.

The optical drive device 106 reads data recorded on an optical disc 204 or writes data to the optical disc 204 using laser light or the like. The optical disc 204 is a portable storage medium on which data is recorded so as to be readable by reflection of light. The optical disc 204 may be a digital versatile disc (DVD), a DVD-RAM, a compact disc read only memory (CD-ROM), a CD-recordable (CD-R), a CD-rewritable (CD-RW), or the like.

The device connection interface 107 is a communication interface for connecting peripheral devices to the image processing apparatus 10. A surveillance camera 13a is connected to the device connection interface 107. For example, a memory device 205 and a memory reader/writer 206 may be connected to the device connection interface 107. The memory device 205 is a storage medium having a function of communicating with the device connection interface 107. The memory reader/writer 206 is a device that writes data to a memory card 207 or reads data from the memory card 207. The memory card 207 is a card-type storage medium.

The network interface 108 is connected to the network NW. The network interface 108 transmits and receives data to and from the continuous authentication apparatus 20, another computer, or a communication device via the network NW. The network interface 108 is, for example, a wired communication interface connected to a wired communication device such as a switch or a router by a cable. Alternatively, the network interface 108 may be a wireless communication interface communicatively connected to a wireless communication device such as an access point by radio waves.

The image processing apparatus 10 is able to implement the processing functions of the present embodiment with the hardware described above. The image processing apparatus 10 implements the processing functions of the present embodiment by executing a program recorded on a computer-readable storage medium, for example. The program describing the processing contents to be executed by the image processing apparatus 10 may be recorded on various storage media.

For example, a program to be executed by the image processing apparatus 10 may be stored in the storage device 103. The processor 101 loads at least a part of the program from the storage device 103 into the memory 102, and executes the program. The program to be executed by the image processing apparatus 10 may be recorded on a portable storage medium such as the optical disc 204, the memory device 205, or the memory card 207. The program stored in the portable storage medium becomes executable after being installed in the storage device 103 under the control of the processor 101, for example. Alternatively, the processor 101 may execute the program while reading the program directly from the portable storage medium. Note that the continuous authentication apparatus 20 illustrated in FIG. 2 may include a computer and may be implemented with the same hardware as illustrated in FIG. 3.

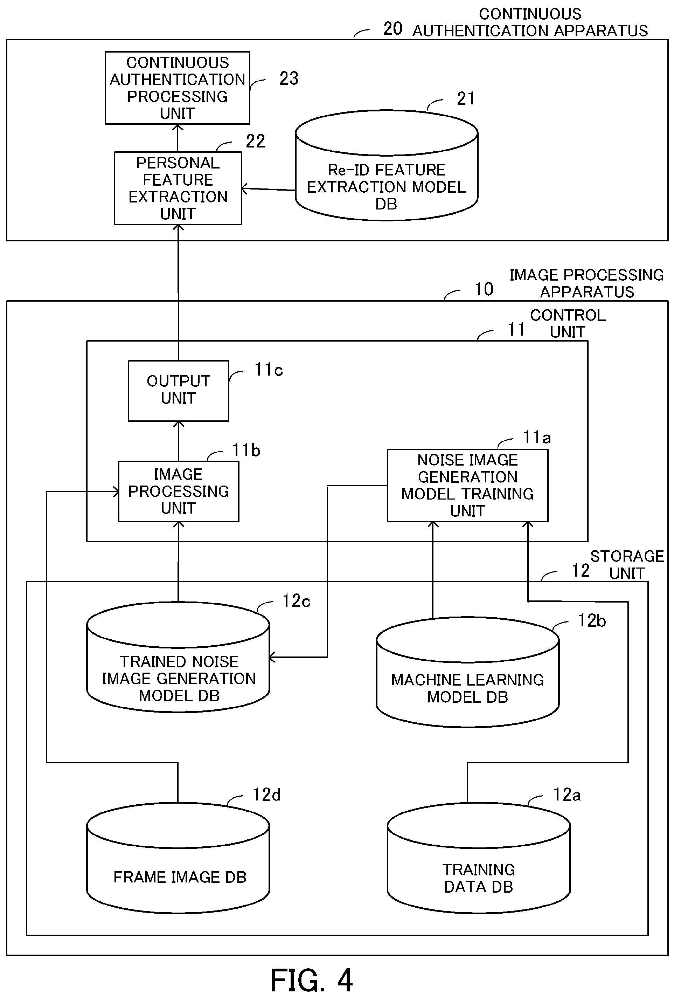

FIG. 4 illustrates an example of functional blocks of the image processing apparatus and the continuous authentication apparatus. In the following description, it is assumed that a processed image refers to a noise image to which noise has been added.

The image processing apparatus 10 includes the control unit 11 and a storage unit 12. The control unit 11 includes a noise image generation model training unit 11a, an image processing unit 11b, and an output unit 11c. The storage unit 12 includes a training data database (DB) 12a, a machine learning model DB 12b, a trained noise image generation model DB 12c, and a frame image DB 12d.

The noise image generation model training unit 11a inputs training data into a machine learning model to train a noise image generation model using machine learning, thereby generating a trained noise image generation model (parameters of the trained noise image generation model). The image processing unit 11b inputs a frame image acquired via a surveillance camera into the trained noise image generation model to process the frame image, thereby generating a noise image that enables continuous authentication with personal individuality concealed. The output unit 11c outputs the generated noise image to the continuous authentication apparatus 20.

The training data DB 12a stores, for example, training frame images, training frame image person region coordinate data, and insignificant color data on colors that are those of low importance in Re-ID processing (or significant color data on colors that are those of high importance in Re-ID processing).

The machine learning model DB 12b stores data on a trained machine learning model to be used for training the noise image generation model. The machine learning model DB 12b stores at least a Re-ID feature extraction model (a trained Re-ID feature extraction model) that is used in Re-ID processing performed by the continuous authentication apparatus 20 connected via the output unit 11c.

Further, the machine learning model DB 12b stores, for example, a face detection model for detecting a face from a person and gradient weighted-class activation mapping (Grad-CAM). Grad-CAM is a model that visualizes which part of an image is attended to in machine learning, by focusing on features extracted by a convolutional layer of a convolutional neural network (CNN).

The trained noise image generation model DB 12c stores the trained noise image generation model (parameters of the trained noise image generation model) generated by the noise image generation model training unit 11a. The frame image DB 12d stores frame images captured by a surveillance camera.

The continuous authentication apparatus 20 includes a Re-ID feature extraction model DB 21, a personal feature extraction unit 22, and a continuous authentication processing unit 23. The Re-ID feature extraction model DB 21 stores a Re-ID feature extraction model. The personal feature extraction unit 22 inputs a noise image received from the image processing apparatus 10 (a noise image in which noise for concealing personal individuality has been added to a non-attention region that is not attended to by the Re-ID feature extraction model) into the Re-ID feature extraction model to extract a person region, and extracts personal features from the region.

The continuous authentication processing unit 23 performs continuous authentication using Re-ID based on the extracted personal features. Since the continuous authentication apparatus 20 performs continuous authentication based on an image in which noise has been added to a non-attention region that is not attended to in Re-ID, it is possible to perform continuous authentication with high accuracy while protecting the privacy of a subject.

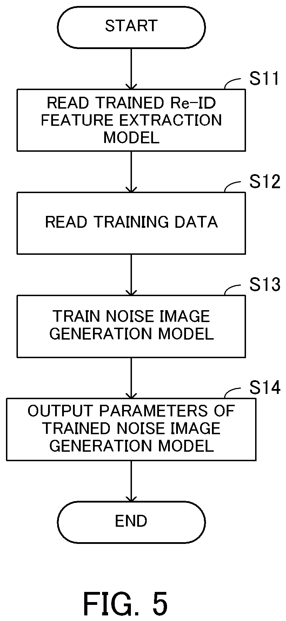

FIG. 5 is a flowchart illustrating an example operation for training a noise image generation model.

[Step S11] The control unit 11 reads a trained Re-ID feature extraction model from the machine learning model DB 12b.

[Step S12] The control unit 11 reads training data from the training data DB 12a.

[Step S13] The control unit 11 performs machine learning using the training data to train a noise image generation model. In this machine learning, a Re-ID feature obtained by inputting original training data (an image including a person) into the trained Re-ID feature extraction model is compared with a Re-ID feature obtained by inputting, into the trained Re-ID feature extraction model, image data obtained by adding noise to the training data.

[Step S14] The control unit 11 generates parameters for the trained noise image generation model and stores the generated parameters in the trained noise image generation model DB 12c. In the case where the noise image generation model is configured with a neural network, the parameters include weighting coefficients between the nodes included in the neural network.

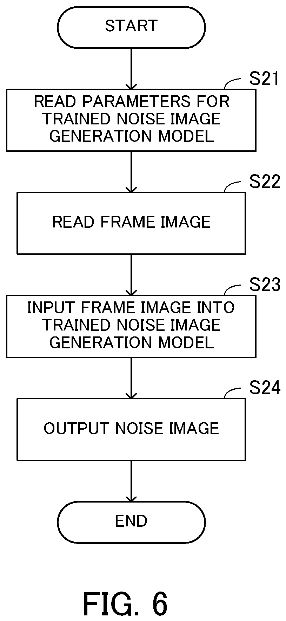

FIG. 6 is a flowchart illustrating an example operation for image processing.

[Step S21] The control unit 11 reads parameters for a trained noise image generation model from the trained noise image generation model DB 12c.

[Step S22] The control unit 11 reads a frame image from the frame image DB 12d.

[Step S23] The control unit 11 inputs the frame image into the trained noise image generation model to generate a noise image obtained by adding noise to the frame image. The noise image is an image in which noise that conceals personal individuality without degrading the accuracy of continuous authentication has been added to a person region in the frame image. The trained noise image generation model may be, for example, a model that adds noise similar to the noise added to the person region to at least a part of a background region (for example, a randomly selected region).

[Step S24] The control unit 11 outputs the noise image to the continuous authentication apparatus 20.

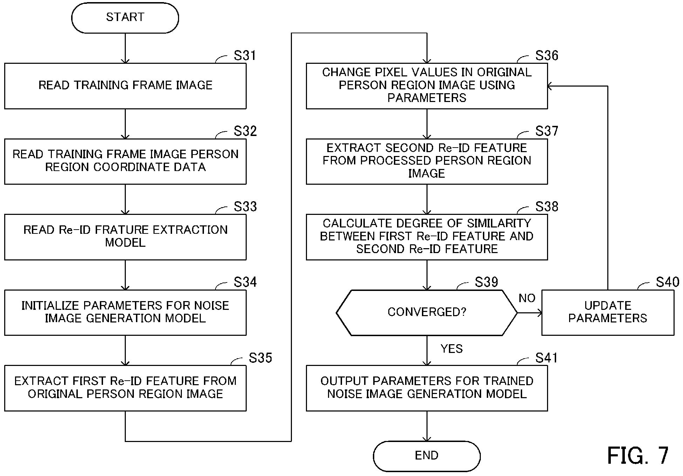

The following describes training procedures for training a noise image generation model in detail with reference to FIGS. 7 to 12. In the first to fourth training processes described below, regions to which noise is added within a person region differ from each other.

Parameters to be trained are those that change the position of a noise addition region within a noise addition target region and a noise type (such as a color, a shape, or the like of noise) as an image processing characteristic. Note that, in order to protect privacy, it is desirable to perform the training so that the noise addition region is as large as possible. Further, a plurality of noise addition regions may be set, and a different type of noise may be added to each noise addition region. Conversely, an entire person region may be set as a noise addition region, and one type of noise may be uniformly added.

FIG. 7 is a flowchart illustrating an example of the first training process for a trained noise image generation model. FIG. 7 illustrates an example of a training process for a trained noise image generation model that changes pixel values in a person region.

[Step S31] The control unit 11 reads a training frame image from the training data DB 12a.

[Step S32] The control unit 11 reads training frame image person region coordinate data from the training data DB 12a.

[Step S33] The control unit 11 reads a Re-ID feature extraction model (a trained Re-ID feature extraction model) from the machine learning model DB 12b.

[Step S34] The control unit 11 initializes parameters for a noise image generation model. In the first training process, an entire person region is a noise addition target region. Therefore, parameters that change the position of the noise addition region in the person region and a noise type for the noise addition region are training targets (update targets in step S40). In step S34, the position of the noise addition region in the person region and the noise type for the noise addition region are initialized using, for example, random values.

[Step S35] The control unit 11 generates an original person region image on the basis of the training frame image and the training frame image person region coordinate data. Then, the control unit 11 inputs the original person region image into the Re-ID feature extraction model to extract a first Re-ID feature from the original person region image.

[Step S36] The control unit 11 processes the original person region image by changing its pixel values (that is, adding noise) using the noise image generation model in which the current parameters are set, thereby generating a processed person region image.

[Step S37] The control unit 11 inputs the processed person region image generated in step S36 into the Re-ID feature extraction model, to extract a second Re-ID feature from the processed person region image.

[Step S38] The control unit 11 calculates the degree of similarity between the first Re-ID feature extracted from the original person region image and the second Re-ID feature extracted from the processed person region image.

[Step S39] If the calculated degree of similarity is equal to or greater than a threshold value, the control unit 11 determines that the degree of similarity has converged, and advances the process to step S41. If the calculated degree of similarity is less than the threshold value, the control unit 11 determines that the degree of similarity has not converged, and advances the process to step S40.

Note that, in the case where the degree of similarity between the first Re-ID feature and the second Re-ID feature has converged, it means that the processed person region image, from which the second Re-ID feature has been extracted, is an image that conceals the personal individuality of the person to protect the privacy without degrading the accuracy of the Re-ID processing for the person.

[Step S40] The control unit 11 updates the parameters of the noise image generation model. Then, the process returns to step S36.

[Step S41] The control unit 11 outputs the current parameters of the noise image generation model as the parameters for a trained noise image generation model. As a result, the trained noise image generation model is generated that receives an image and generates a noise image in which noise has been added to a person region. The output parameters are stored in the trained noise image generation model DB 12c.

In the first training process described above, under the condition that the amount of change in the Re-ID feature is equal to or less than a certain level corresponding to the threshold value, an image processing region is found from the entire person region, and noise is determined as an image processing characteristic for the image processing region. The found image processing region is estimated to be a region having a low degree of attention in Re-ID processing within the person region. Through the above-described training, the trained noise image generation model is generated that adds noise to a person region in an input image. With this trained noise image generation model, it is possible to generate an image that enables personal feature extraction by Re-ID processing to be performed with high accuracy while protecting the privacy of a subject.

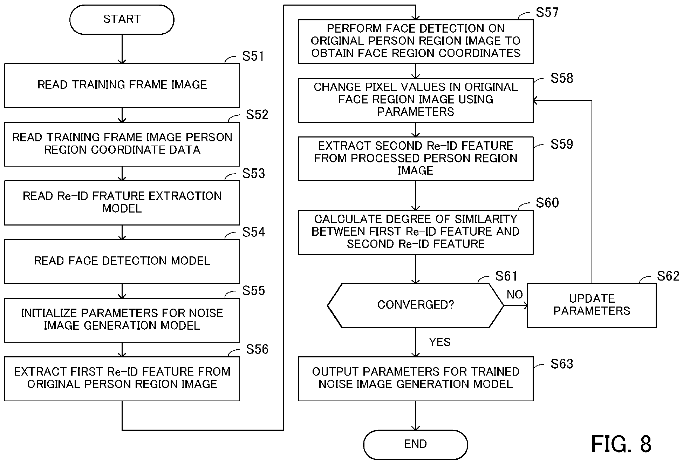

FIG. 8 is a flowchart illustrating an example of a second training process for a trained noise image generation model. FIG. 8 illustrates an example of a training process for a trained noise image generation model that changes pixel values in a face region.

[Step S51] The control unit 11 reads a training frame image from the training data DB 12a.

[Step S52] The control unit 11 reads training frame image person region coordinate data from the training data DB 12a.

[Step S53] The control unit 11 reads a Re-ID feature extraction model (a trained Re-ID feature extraction model) from the machine learning model DB 12b.

[Step S54] The control unit 11 reads a face detection model from the machine learning model DB 12b.

[Step S55] The control unit 11 initializes parameters for a noise image generation model. In the second training process, a face region detected from a person region is a noise addition target region. Therefore, parameters to be updated are those that change the position of a noise addition region in the face region and a noise type for the noise addition region.

[Step S56] The control unit 11 generates an original person region image on the basis of the training frame image and the training frame image person region coordinate data. Then, the control unit 11 inputs the original person region image into the Re-ID feature extraction model to extract a first Re-ID feature from the original person region image.

[Step S57] The control unit 11 performs face detection on the original person region image using the face detection model to obtain face region coordinates.

[Step S58] The control unit 11 generates an original face region image on the basis of the face region coordinates, and processes pixel values in the original face region image (that is, adds noise) using the noise image generation model in which the current parameters are set, thereby generating a processed face region image.

[Step S59] The control unit 11 inputs, into the Re-ID feature extraction model, a processed person region image obtained by replacing the image of the face region of the original person region image with the processed face region image generated in step S58, to extract a second Re-ID feature from the processed person region image.

[Step S60] The control unit 11 calculates the degree of similarity between the first Re-ID feature extracted from the original person region image and the second Re-ID feature extracted from the processed person region image.

[Step S61] If the calculated degree of similarity is equal to or greater than a threshold value, the control unit 11 determines that the degree of similarity has converged, and advances the process to step S63. If the calculated degree of similarity is less than the threshold value, the control unit 11 determines that the degree of similarity has not converged, and advances the process to step S62.

[Step S62] The control unit 11 updates the parameters of the noise image generation model. Then, the process returns to step S58.

[Step S63] The control unit 11 outputs the current parameters of the noise image generation model as the parameters for a trained noise image generation model. As a result, the trained noise image generation model is generated that receives an image and generates a noise image in which noise has been added to a face region of a person region. The output parameters are stored in the trained noise image generation model DB 12c.

In the second training process described above, under the condition that the amount of change in the Re-ID feature is equal to or less than a certain level corresponding to the threshold value, a face region is found from a person region as an image processing region, and noise is determined as an image processing characteristic for the image processing region. The found face region is estimated to be a region having a low degree of attention in Re-ID processing. Through the above-described training, the trained noise image generation model is generated that adds noise to a face region of a person region in an input image. With this trained noise image generation model, it is possible to generate an image that enables personal feature extraction by Re-ID processing to be performed with high accuracy while protecting the privacy of a subject.

Note that a technique for adding noise to a face region by changing pixel values in the face region is disclosed in, for example, "Dietlmeier, J. Antony, K. McGuinness and N. O'Connor, "How important are faces for person re-identification?," in 2020 25th International Conference on Pattern Recognition (ICPR), Milan, Italy, 2021 pp. 6912-6919". In this technique, even blurring or blackening a face has little effect on the accuracy of continuous authentication.

In addition, by adding noise not only to a face region of a person but also to a background region where no face is present, it is possible to not only conceal personal individuality but also make the presence of people difficult to detect, so as to protect the privacy with respect to the entire image.

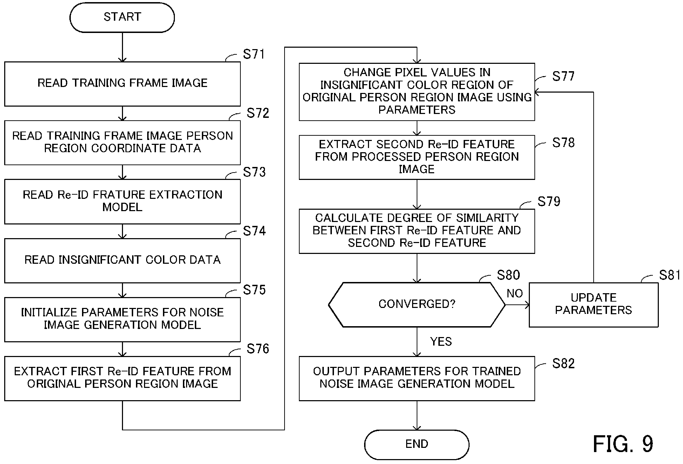

FIG. 9 is a flowchart illustrating an example of a third training process for a trained noise image generation model. FIG. 9 illustrates an example of a training process for a trained noise image generation model that changes pixel values of insignificant colors.

[Step S71] The control unit 11 reads a training frame image from the training data DB 12a.

[Step S72] The control unit 11 reads training frame image person region coordinate data from the training data DB 12a.

[Step S73] The control unit 11 reads a Re-ID feature extraction model (a trained Re-ID feature extraction model) from the machine learning model DB 12b.

[Step S74] The control unit 11 reads insignificant color data from the training data DB 12a. Note that significant color data is data on colors that are those of high importance for feature extraction in performing Re-ID processing, and the insignificant color data is data on colors that are those of less importance for feature extraction in performing Re-ID processing.

In the training data DB 12a, significant color data obtained by converting RGB information of significant colors into data and insignificant color data obtained by converting RGB information of insignificant colors into data are stored in advance. For example, a possible method for determining significant or insignificant colors is, for example, a method of creating a histogram of color information from a data set of person images, setting colors having a low frequency of appearance as significant colors, and setting the other colors as insignificant colors.

[Step S75] The control unit 11 initializes parameters for a noise image generation model. In the third training process, a region of insignificant colors within a person region is a noise addition target region. Therefore, parameters that change the position of the noise addition region within an insignificant color region and a noise type for the noise addition region are training targets (update targets in step S81). In step S75, the position of the noise addition region within the insignificant color region and the noise type for the noise addition region are initialized using, for example, random values.

[Step S76] The control unit 11 generates an original person region image on the basis of the training frame image and the training frame image person region coordinate data. Then, the control unit 11 inputs the original person region image into the Re-ID feature extraction model to extract a first Re-ID feature from the original person region image.

[Step S77] The control unit 11 changes pixel values in the insignificant color region (a predetermined color region) of the original person region image using the parameters of the noise image generation model, thereby generating a processed person region image. In the case of changing the pixel values of insignificant colors, it is preferable to change the pixel values to obtain colors that are less likely to reveal personal individuality easily, such as black, white, or colors close to skin colors.

[Step S78] The control unit 11 inputs the processed person region image generated in step S77 into the Re-ID feature extraction model, to extract a second Re-ID feature from the processed person region image.

[Step S79] The control unit 11 calculates the degree of similarity between the first Re-ID feature extracted from the original person region image and the second Re-ID feature extracted from the processed person region image.

[Step S80] If the calculated degree of similarity is equal to or greater than a threshold value, the control unit 11 determines that the degree of similarity has converged, and advances the process to step S82. If the calculated degree of similarity is less than the threshold value, the control unit 11 determines that the degree of similarity has not converged, and advances the process to step S81.

[Step S81] The control unit 11 updates the parameters of the noise image generation model. Then, the process returns to step S77.

[Step S82] The control unit 11 outputs the current parameters of the noise image generation model as the parameters for a trained noise image generation model. As a result, the trained noise image generation model is generated that receives an image and generates a noise image in which noise has been added to an insignificant color region of a person region. The output parameters are stored in the trained noise image generation model DB 12c.

Note that a Re-ID feature extraction model places importance on appearance features that have a large amount of information such as colorful colors and clothing logos and more greatly represent personal individuality, and this is disclosed in, for example, "Liu, C., Gong, S., Loy, C.C., Lin, X. (2012). Person Re-identification: What Features Are Important?. In: Fusiello, A., Murino, V., Cucchiara, R. (eds) Computer Vision - ECCV 2012. Workshops and Demonstrations. ECCV 2012. Lecture Notes in Computer Science, vol 7583. Springer, Berlin, Heidelberg. https://doi.org/10.1007/978-3-642-33863-2_39". Therefore, the image processing apparatus 10 is configured to generate a noise image by adding noise, which changes pixel values in an insignificant color region that is not regarded as important by the Re-ID feature extraction model, to a non-attention region that is not attended to by the Re-ID feature extraction model. As a result, it is possible to generate an image that enables personal feature extraction by Re-ID processing to be performed while protecting the privacy of a subject.

In the third training process described above, under the condition that the amount of change in the Re-ID feature is equal to or less than a certain level corresponding to the threshold value, an image processing region is found from an insignificant color region of a person region, and noise is determined as an image processing characteristic for the image processing region. The found image processing region is estimated to be an insignificant color region and a region having a low degree of attention in Re-ID processing. Through the above-described training, the trained noise image generation model is generated that adds noise to an insignificant color region in a person region in an input image. With this trained noise image generation model, it is possible to generate an image that enables personal feature extraction by Re-ID processing to be performed with high accuracy while protecting the privacy of a subject.

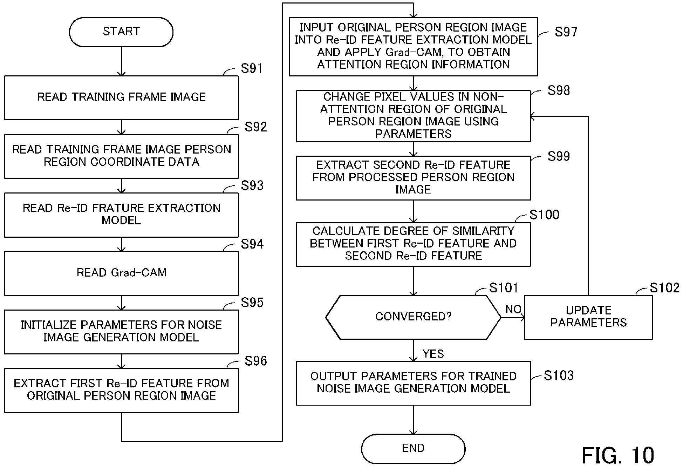

FIG. 10 is a flowchart illustrating an example of a fourth training process for a trained noise image generation model. FIG. 10 illustrates an example of a training process for a trained noise image generation model that changes pixel values in a non-attention region that is not attended to by a Re-ID feature extraction model.

[Step S91] The control unit 11 reads a training frame image from the training data DB 12a.

[Step S92] The control unit 11 reads training frame image person region coordinate data from the training data DB 12a.

[Step S93] The control unit 11 reads a Re-ID feature extraction model (a trained Re-ID feature extraction model) from the machine learning model DB 12b.

[Step S94] The control unit 11 reads Grad-CAM from the machine learning model DB 12b.

[Step S95] The control unit 11 initializes parameters for a noise image generation model. In the fourth training process, an image of a non-attention region within a person region is a noise addition target region. Therefore, parameters that change the position of the non-attention region within the person region and a noise type for the non-attention region are training targets (update targets in step S102). In step S95, the position of the noise addition region within the non-attention region and the noise type for the noise addition region are initialized using, for example, random values.

[Step S96] The control unit 11 generates an original person region image on the basis of the training frame image and the training frame image person region coordinate data. Then, the control unit 11 inputs the original person region image into the Re-ID feature extraction model to extract a first Re-ID feature from the original person region image.

[Step S97] The control unit 11 inputs the original person region image into the Re-ID feature extraction model and applies Grad-CAM, to obtain attention region information for the original person region image.

[Step S98] The control unit 11 detects, based on the attention region information, a non-attention region of the original person region image, and changes pixel values in the non-attention region of the original person region image using the parameters of the noise image generation model, thereby generating a processed person region image.

[Step S99] The control unit 11 inputs the processed person region image generated in step S98 into the Re-ID feature extraction model to extract a second Re-ID feature for the processed person region image.

[Step S100] The control unit 11 calculates the degree of similarity between the first Re-ID feature extracted from the original person region image and the second Re-ID feature extracted from the processed person region image.

[Step S101] If the calculated degree of similarity is equal to or greater than a threshold value, the control unit 11 determines that the degree of similarity has converged, and advances the process to step S103. If the calculated degree of similarity is less than the threshold value, the control unit 11 determines that the degree of similarity has not converged, and advances the process to step S102.

[Step S102] The control unit 11 updates the parameters of the noise image generation model. Then, the process returns to step S98.

[Step S103] The control unit 11 outputs the current parameters of the noise image generation model as the parameters for a trained noise image generation model. As a result, the trained noise image generation model is generated that receives an image and generates a noise image in which noise has been added to a non-attention region of a person region. The output parameters are stored in the trained noise image generation model DB 12c.

In the fourth training process described above, under the condition that the amount of change in the Re-ID feature value is equal to or less than a certain level corresponding to the threshold value, an image processing region is found from a non-attention region of a person region, and noise is determined as an image processing characteristic for the image processing region. A non-attention region of the found image processing region is a region having a low degree of attention in Re-ID processing. Through the above-described training, the trained noise image generation model is generated that adds noise to a non-attention region of a person region in an input image. With this trained noise image generation model, it is possible to generate an image that enables personal feature extraction by Re-ID processing to be performed with high accuracy while protecting the privacy of a subject.

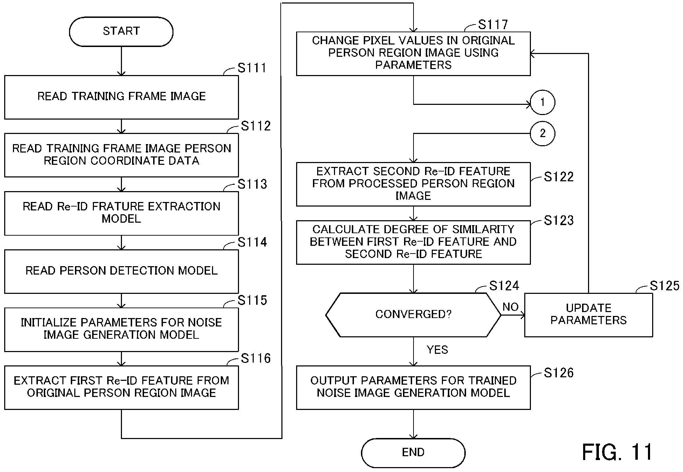

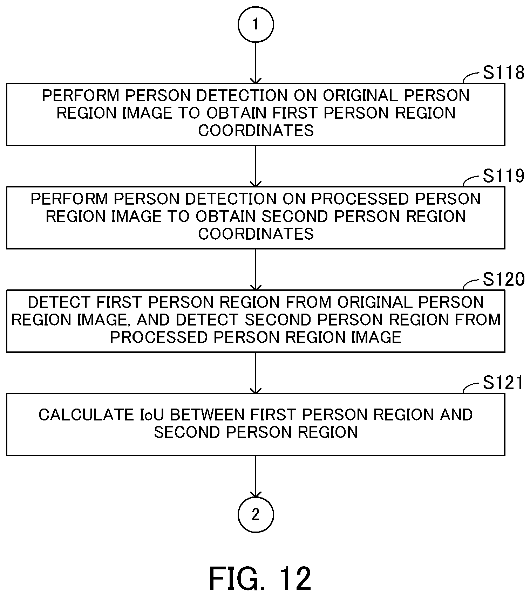

FIGS. 11 and 12 provide a flowchart illustrating an example of the fifth training process for a trained noise image generation model. FIGS. 11 and 12 illustrate an example of a training process for a trained noise image generation model that changes pixel values in a person region without degrading the accuracy of person detection.

[Step S111] The control unit 11 reads a training frame image from the training data DB 12a.

[Step S112] The control unit 11 reads training frame image person region coordinate data from the training data DB 12a.

[Step S113] The control unit 11 reads a Re-ID feature extraction model (a trained Re-ID feature extraction model) from the machine learning model DB 12b.

[Step S114] The control unit 11 reads a person detection model from the machine learning model DB 12b.

[Step S115] The control unit 11 initializes parameters for a noise image generation model. In the fifth training process, as in the first training process, the entire person region is a noise addition target region. Therefore, parameters that change the position of the noise addition region within the person region and a noise type for the noise addition region are training targets (update targets in step S125). In step S115, the position of the noise addition region in the person region and the noise type for the noise addition region are initialized using, for example, random values.

[Step S116] The control unit 11 generates an original person region image on the basis of the training frame image and the training frame image person region coordinate data. Then, the control unit 11 inputs the original person region image into the Re-ID feature extraction model to extract a first Re-ID feature from the original person region image.

[Step S117] The control unit 11 changes pixel values in the original person region image using the parameters of the noise image generation model, thereby generating a processed person region image.

[Step S118] The control unit 11 inputs the original person region image into the person detection model to perform person detection, thereby obtaining first person region coordinates.

[Step S119] The control unit 11 inputs the processed person region image into the person detection model to perform person detection, thereby obtaining second person region coordinates.

[Step S120] The control unit 11 detects a first person region from the original person region image based on the first person region coordinates, and detects a second person region from the processed person region image based on the second person region coordinates.

[Step S121] The control unit 11 calculates an intersection over union (IoU) between the first person region detected from the original person region image and the second person region detected from the processed person region image, to obtain an IoU value indicating the degree of overlap between the first person region and the second person region.

[Step S122] The control unit 11 inputs the processed person region image generated in step S117 into the Re-ID feature extraction model, to extract a second Re-ID feature from the processed person region image.

[Step S123] The control unit 11 calculates the degree of similarity between the first Re-ID feature extracted from the original person region image and the second Re-ID feature extracted from the processed person region image.

[Step S124] The control unit 11 determines whether the degree of similarity has converged at a threshold value or greater and whether the IoU value has converged at a threshold value or greater. If they have converged, the process proceeds to step S126. If they have not converged, the process proceeds to step S125.

[Step S125] The control unit 11 updates the parameters of the noise image generation model. The process returns to step S117.

[Step S126] The control unit 11 outputs the current parameters of the noise image generation model as the parameters for a trained noise image generation model. As a result, the trained noise image generation model is generated that receives an image and generates a noise image in which noise has been added to a person region. The output parameters are stored in the trained noise image generation model DB 12c.

In the fifth training process described above, under the condition that the amount of change in the Re-ID feature is equal to or less than a certain level corresponding to the threshold value, an image processing region is found from the entire person region, and noise is determined as an image processing characteristic for the image processing region. The found image processing region is estimated to be a region having a low degree of attention in Re-ID processing within the person region. Through the above-described training, the trained noise image generation model is generated that adds noise to a person region in an input image. With this trained noise image generation model, it is possible to generate an image that enables personal feature extraction by Re-ID processing to be performed with high accuracy while protecting the privacy of a subject without degrading the accuracy of person detection.

The control unit 11 may perform training by combining two or more training processes among the first to fifth training processes described above, to generate a noise image generation model for generating a noise image by selecting an optimal process from among the image processing processes used in the two or more training processes. Alternatively, the control unit 11 may generate a noise image generation model that generates a noise image having a small effect on the feature calculation, by using all the image processing processes used in the two or more training processes.

The image processing apparatus of the present embodiment described above may be implemented by a computer. In this case, a program describing the processing contents of the functions that the image processing apparatus has is provided. By executing the program on the computer, the above-described processing functions are implemented on the computer.

The program describing the processing contents may be recorded on a computer-readable storage medium. Examples of the computer-readable storage medium include a magnetic storage unit, an optical disc, a magneto-optical storage medium, and a semiconductor memory. The magnetic storage unit may be a hard disk drive (HDD), a flexible disk (FD), a magnetic tape, or the like. The optical disc is a CD-ROM/RW or the like. The magneto-optical storage medium may be a magneto optical disk (MO) or the like.

In order to distribute the program, for example, portable storage media such as CD-ROMs on which the program is recorded are sold. Alternatively, the program may be stored in a storage unit of a server computer and transferred from the server computer to another computer via a network.

The computer that executes the program stores, for example, the program recorded on a portable storage medium or the program transferred from the server computer, in its local storage unit. Then, the computer reads the program from the local storage unit and performs processing according to the program. The computer is also able to read the program directly from the portable storage medium and perform processing according to the program.

Each time a program is transferred from a server computer connected to the computer via a network, the computer is able to sequentially perform processing according to the received program. In addition, at least a part of the above-described processing functions may be implemented by an electronic circuit such as a DSP, an ASIC, or a PLD.

The foregoing merely illustrates the principles of the invention. Further, many modifications and variations are possible for those skilled in the art, and the present invention is not limited to the exact construction and application examples shown and described above, and all corresponding modifications and equivalents are deemed to be within the scope of the present invention as defined by the appended claims and their equivalents.

### Reference Signs List

- 10: Image processing apparatus
- 11: Control unit
- 13: Image capturing unit
- a1: Person region
- a2: Processed person region
- c1: Feature calculation
- V1: First Feature
- V1a: Second feature
- m0: Image processing model
- g1: Captured image
- g1a: Processed image

## Claims

1. An image processing program that causes a computer to perform a process comprising:
obtaining a first feature from a person region of an input image by performing a predetermined feature calculation, obtaining a second feature from a processed person region by performing the predetermined feature calculation, the processed person region being obtained by processing a part of the person region of the input image, determining an image processing region in the person region of the input image and an image processing characteristic for the image processing region so that an amount of change between the first feature and the second feature is equal to or less than a predetermined value, and generating, by machine learning, an image processing model that receives the input image and generates an output image by processing the input image based on the determined image processing region and the determined image processing characteristic; and
processing a part of a person region of a captured image using the image processing model.

2. The image processing program according to claim 1, wherein the image processing characteristic indicates a characteristic of noise, and the process includes generating the image processing model that adds the noise based on the image processing characteristic to the part of the person region of the captured image.

3. The image processing program according to claim 2, wherein the process includes generating the image processing model that adds the noise to a face region of the person region of the captured image.

4. The image processing program according to claim 2, wherein the process includes generating the image processing model that adds the noise to a predetermined color region of the person region of the captured image.

5. The image processing program according to claim 2, wherein, in response to an attention region being detected by a model that visualizes the attention region that is attended to by a feature extraction model that performs the predetermined feature calculation, the process includes setting, as the image processing region, a non-attention region of the person region of the captured image excluding the attention region, and generating the image processing model that adds the noise to the non-attention region.

6. The image processing program according to claim 1, wherein, upon determining that a degree of overlap between the person region of the input image and the processed person region obtained by processing the part of the person region of the input image is equal to or greater than a predetermined value, the process includes determining the image processing region in the person region of the input image and the image processing characteristic.

7. The image processing program according to claim 1, wherein the process includes outputting an image obtained by processing the part of the person region of the captured image using the image processing model, to an apparatus that performs continuous authentication by performing personal feature extraction using a feature extraction model that performs the predetermined feature calculation.

8. An image processing apparatus comprising:
an image capturing unit; and
a control unit for obtaining a first feature from a person region of an input image by performing a predetermined feature calculation, obtaining a second feature from a processed person region by performing the predetermined feature calculation, the processed person region being obtained by processing a part of the person region of the input image, determining an image processing region in the person region of the input image and an image processing characteristic for the image processing region so that an amount of change between the first feature and the second feature is equal to or less than a predetermined value, generating, by machine learning, an image processing model that receives the input image and generates an output image by processing the input image based on the determined image processing region and the determined image processing characteristic, and processing a part of a person region of a captured image obtained from the image capturing unit, using the image processing model.

9. An image processing method executed by a computer, the image processing method comprising:
obtaining a first feature from a person region of an input image by performing a predetermined feature calculation, obtaining a second feature from a processed person region by performing the predetermined feature calculation, the processed person region being obtained by processing a part of the person region of the input image, determining an image processing region in the person region of the input image and an image processing characteristic for the image processing region so that an amount of change between the first feature and the second feature is equal to or less than a predetermined value, and generating, by machine learning, an image processing model that receives the input image and generates an output image by processing the input image based on the determined image processing region and the determined image processing characteristic; and
processing a part of a person region of a captured image using the image processing model.
